# EUROPEAN PATENT APPLICATION

(11) **EP 2 306 612 A2**
(43) Date of publication of application: **06.04.2011**
(21) Application number: 10251631.7
(22) Date of filing: 22.09.2010
(51) Int. Cl.: H02J 7/00

(54) **Battery apparatus and electric vehicle**

(30) Priority: 30.09.2009 JP 2009227918
(71) Applicant: Sanyo Electric Co., Ltd., Osaka 570-8677 (JP)
(72) Inventor: Takao, Hiroshi, Moriguchi City Osaka 570-8677 (JP); Kakutani, Kazushige, Moriguchi City Osaka 570-8677 (JP)
(74) Representative: Calderbank, Thomas Roger

(57) **Abstract**

Terminals of a battery apparatus is connected to terminals of a vehicle body controller, respectively, and terminals of the battery apparatus are connected to terminals of a charger, respectively. The terminals are connected to each other through a communication path, and the terminals are connected to each other through a communication path. A termination resistor and a switch are connected in series between the communication paths. A microcomputer controls the switch based on a voltage of the terminal.

## Description

The present invention relates to a battery apparatus and an electric vehicle including the same.

Electric vehicles such as electric bicycles have conventionally been equipped with battery apparatuses including batteries. The battery apparatus includes a control circuit for controlling charge/discharge of the battery (hereinafter referred to as a battery control circuit). The battery control circuit is connected to communicate with a control circuit of another module provided in the electric vehicle. For example, the battery control circuit and a control circuit of a user interface (hereinafter referred to as a UI control circuit) displaying remaining capacity of the battery and so on are connected to communicate with each other. In this case, various types of information (e.g., the remaining capacity of the battery) is transmitted and received between the battery control circuit and the UI control circuit.

In recent years, a controller area network (CAN) has been used as a form of communication among a plurality of control circuits (see JP 2002-101109 A, for example). In communication using the CAN, two termination resistors are usually connected to a communication bus for impedance matching.

In the electric bicycles and the like, the termination resistors are provided in any of the plurality of modules having the control circuits. However, a connection state among the plurality of modules is optionally changed by users. The battery apparatus and the user interface are connected to each other during driving of the electric bicycle, and the battery apparatus is separated from the user interface and connected to a charger during the charge of the battery of the battery apparatus, for example. This makes it difficult to properly connect the two termination resistors to the communication bus.

An object of the present invention is to provide a battery apparatus capable of properly connecting a termination resistor to a communication bus and an electric vehicle including the same.
(1) According to an aspect of the present invention, a battery apparatus arranged to form a communication bus when being connected to another module includes a control circuit arranged to have a communication function for communicating with the another module through the communication bus, a battery arranged to supply electric power to the another module when the another module is connected to the battery apparatus, a first termination resistor arranged to be switchable between a first state where the first termination resistor is connected to the communication bus and a second state where the first termination resistor is separated from the communication bus, a detection circuit configured to be able to detect that the another module is connected to the battery apparatus, and a switch circuit arranged to determine whether or not the another module is connected to the battery apparatus based on detection performed by the detection circuit, and selectively switches the first termination resistor between the first state and the second state based on a result of determination.
   The communication bus is formed when the another module is connected to the battery apparatus. The control circuit communicates with the another module through the communication bus.
   When the another module is connected to the battery apparatus, the electric power is supplied from the battery to the another module, and the detection circuit detects that the another module is connected to the battery apparatus. The switch circuit determines whether or not the another module is connected to the battery apparatus based on the detection performed by the detection circuit. Based on the result of the determination, the switch circuit selectively switches the first state where the first termination resistor is connected to the communication bus and the second state where the first termination resistor is not connected to the communication bus.
   Thus, the number of termination resistors connected to the communication bus can be adjusted depending on a connection state between the battery apparatus and the another module. This allows a state where two termination resistors are properly connected to the communication bus to be maintained even though a user optionally changes the connection state between the battery apparatus and the another module. This results in good communication between the battery apparatus and the another module through the communication bus.
(2) The another module may include first and second modules, the battery may supply electric power to the first and second modules when the first and second modules are connected to the battery apparatus, the detection circuit may be configured to be able to feed back a voltage based on the electric power supplied to each of the first and second modules and detect the voltage fed back from each of the first and second modules when the first and second modules are connected to the battery apparatus, and the switch circuit may determine whether or not each of the first and second modules is connected to the battery apparatus based on the voltage detected by the detection circuit, and selectively switch the first termination resistor between the first state and the second state based on a result of determination.
   In this case, the first termination resistor is selectively switched between the first state and the second state depending on a connection state between the battery apparatus and the first module and a connection state between the battery apparatus and the second module. Thus, the number of termination resistors connected to the communication bus can be adjusted depending on the respective connection states between the battery apparatus and the first and second modules.
   This allows the state where two termination resistors are properly connected to the communication bus to be maintained even though the user optionally changes the respective connection states between the battery apparatus and the first and second modules. This results in good communication between the battery apparatus and the first and second modules through the communication bus.
(3) When determining that the another module is connected to the battery apparatus, the switch circuit may further determine whether or not the another module that is connected to the battery apparatus has a termination resistor based on the voltage detected by the detection circuit, and selectively switch the first termination resistor between the first state and the second state based on a result of determination.
   In this case, the first termination resistor is selectively switched between the first state and the second state depending on whether or not the another module connected to the battery apparatus has the termination resistor. Accordingly, the number of the termination resistors connected to the communication bus can be accurately adjusted in any of the cases where the another module having the termination resistor is connected to the battery apparatus and where the another module not having the termination resistor is connected to the battery apparatus.
(4) The battery apparatus may further include a second termination resistor connected to the communication bus, wherein the switch circuit may determine whether or not two termination resistors are connected to the communication bus based on the voltage detected by the detection circuit, and switch the first termination resistor between the first state and the second state based on a result of determination such that two termination resistors are connected to the communication bus.
   In this case, a state where the second termination resistor is connected to the communication bus is maintained. Therefore, a state where two termination resistors are connected to the communication bus can be reliably maintained by bringing the first termination resistor into the second state when the another module having the termination resistor is connected to the battery apparatus and bringing the first termination resistor into the first state when the another module not having the termination resistor is connected to the battery apparatus.
(5) The another module may include a third module, the third module may have a third termination resistor arranged to be switchable between a third state where the third termination resistor is connected to the communication bus and a fourth state where the third termination resistor is separated from the communication bus, the switch circuit may determine whether or not two termination resistors are connected to the communication bus based on the voltage detected by the detection circuit, and switch the third termination resistor between the third state and the fourth state based on a result of determination such that two termination resistors are connected to the communication bus.
   In this case, the first termination resistor of the battery apparatus is switched between the first and second states, and the third termination resistor of the third module is switched between the third and fourth states. Thus, the number of the termination resistors connected to the communication bus can be more accurately adjusted depending on the connection state between the battery apparatus and the another module.
(6) According to another aspect of the present invention, an electric vehicle includes the battery apparatus according to the one aspect of the present invention, a motor driven by electric power supplied from the battery of the battery apparatus, and a drive wheel that is rotated by a torque generated by the motor.

In the electric vehicle, the motor is driven by the electric power supplied from the battery of the battery apparatus. The drive wheel is rotated by the torque generated by the motor, thereby causing the electric vehicle to move.

The communication bus is formed when the another module is connected to the battery apparatus. The control circuit communicates with the another module through the communication bus.

When the another module is connected to the battery apparatus, the electric power is supplied from the battery to the another module, and the detection circuit detects that the another module is connected to the battery apparatus. The switch circuit determines whether or not the another module is connected to the battery apparatus based on the detection performed by the detection circuit. Based on the result of the determination, the switch circuit selectively switches the first state where the first termination resistor is connected to the communication bus and the second state where the first termination resistor is not connected to the communication bus.

Thus, the number of termination resistors connected to the communication bus can be adjusted depending on a connection state between the battery apparatus and the another module. This allows a state where two termination resistors are properly connected to the communication bus to be maintained even though a user optionally changes the connection state between the battery apparatus and the another module. This results in good communication between the battery apparatus and the another module through the communication bus. Accordingly, driving performance of the electric vehicle can be improved.

According to the present invention, the number of termination resistors connected to the communication bus can be adjusted depending on the connection state between the battery apparatus and the another module. This allows the state where two termination resistors are properly connected to the communication bus to be maintained even though a user optionally changes the connection state between the battery apparatus and the another module. This results in good communication between the battery apparatus and the another module through the communication bus.

Other features, elements, characteristics, and advantages of the present invention will become more apparent from the following description of preferred embodiments of the present invention with reference to the attached drawings.
In the drawings
Fig. 1 is a schematic diagram showing the configuration of an electric bicycle according to an embodiment of the present invention;
Fig. 2 is a block diagram showing the configurations of a user interface, a vehicle body controller, a battery apparatus and a charger in a simplified manner;
Fig. 3 is a schematic diagram showing the detailed configuration of the battery apparatus;
Fig. 4 is a flowchart showing operation of a microcomputer circuit;
Fig. 5 is a schematic diagram for explaining switching of the state of a termination resistor;
Fig. 6 is a schematic diagram for explaining switching of the state of the termination resistor in the battery apparatus when the termination resistor is not provided in the charger;
Fig. 7 is a diagram showing an example in which a capacitor is provided in the charger;
Fig. 8 is a schematic diagram showing another example of connection of detection resistors in the vehicle body controller, the battery apparatus and the charger;
Fig. 9 is a diagram showing an example in which a capacitor is provided in the charger of Fig. 8;
Fig. 10 is a schematic diagram showing a modification of the battery apparatus and the charger;
Fig. 11 is a schematic diagram showing an example of switching of the state of the termination resistor;
Fig. 12 is a schematic diagram showing another modification of the battery apparatus;
Fig. 13 is a schematic diagram showing an example of switching of the state of the termination resistor in the battery apparatus of Fig. 12; and
Fig. 14 is a side view of a two-wheeled electric vehicle including the battery apparatus.

Description will be made of a battery apparatus and an electric vehicle including the same according to embodiments of the present invention while referring to the drawings. In the following description, an electric bicycle is described as an example of the electric vehicle.

### (1) Electric Vehicle

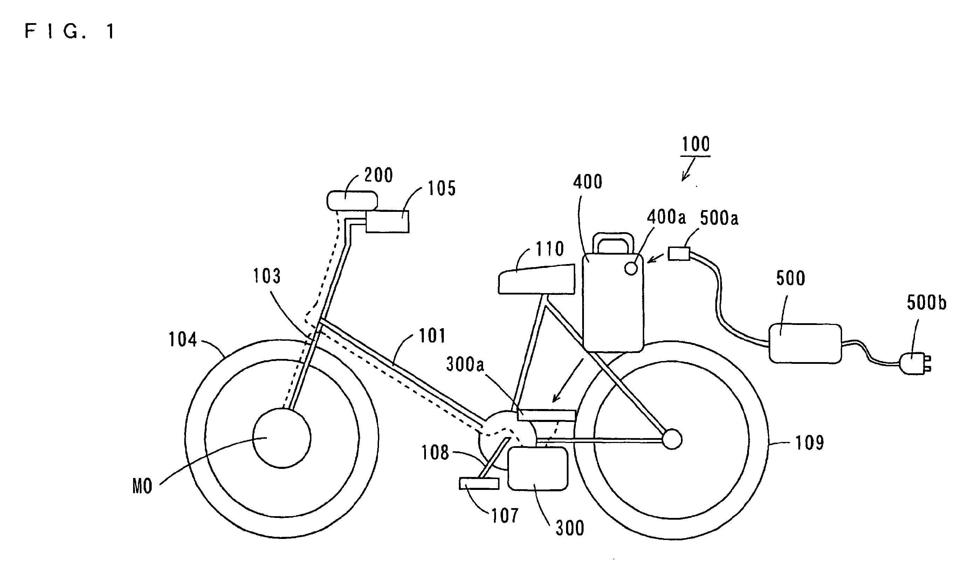

Fig. 1 is a schematic diagram showing the configuration of an electric bicycle according to an embodiment of the present invention.

In the electric bicycle 100 of Fig. 1, a front fork 103 is provided at the front end of a main frame 101 so as to be rotatable within a given angular range around its axis in an up-and-down direction. A front wheel 104 is rotatably supported at the lower end of the front fork 103. A motor MO for rotating the front wheel 104 is attached to the front wheel 104.

A handle 105 is provided at the upper end of the front fork 103. A user interface 200 is arranged at the handle 105. Details of the user interface 200 will be described below.

A crank 108 is rotatably provided at the center of the main frame 101. A pedal 107 is attached to the tip of the crank 108. A saddle 110 is attached to an upper portion of the main frame 101, and a rear wheel 109 is rotatably supported at the rear end of the main frame 101.

A user rotates the pedal 107 and the crank 108 in an integrated manner. A torque generated by the crank 108 is transmitted to the rear wheel 109 through a chain (not shown). This causes the rear wheel 109 to rotate.

A vehicle body controller 300 is provided near the crank 108. The vehicle body controller 300 is electrically connected to the user interface 200 while being electrically connected to the motor MO attached to the front wheel 104. The vehicle body controller 300 detects the torque generated by the crank 108, and controls the motor MO based on the torque.

A battery attachment portion 300a is electrically connected to the vehicle body controller 300. A battery apparatus 400 including a battery is attached to the battery attachment portion 300a in a detachable manner. The battery apparatus 400 is attached to the battery attachment portion 300a, thereby causing the battery apparatus 400 and the vehicle body controller 300 to electrically connected to each other.

Electric power is supplied from the battery apparatus 400 to the user interface 200, the vehicle body controller 300 and the motor MO. The torque of the front wheel 104 is converted into regenerated electric power by the motor MO during deceleration using a brake (not shown) and driving downhill. The battery apparatus 400 is supplied with the regenerated electric power, thus being subjected to regenerative charge.

A plug socket 400a is provided in the battery apparatus 400. A plug 500a of a charger 500 is inserted in the plug socket 400a. This causes the charger 500 and the battery apparatus 400 to be electrically connected to each other. A plug 500b of the charger 500 is inserted in an outlet of a commercial power supply that is not shown. The charger 500 performs AC-DC (alternating current-direct current) conversion on electric power supplied from the commercial power supply and supplies the converted electric power to the battery of the battery apparatus 400. This causes the battery of the battery apparatus 400 to be charged.

In the present embodiment, the vehicle body controller 300 is an example of a first module, and the charger 500 is an example of a second module.

### (2) The User Interface, the Vehicle Body Controller, the Battery Apparatus and the Charger

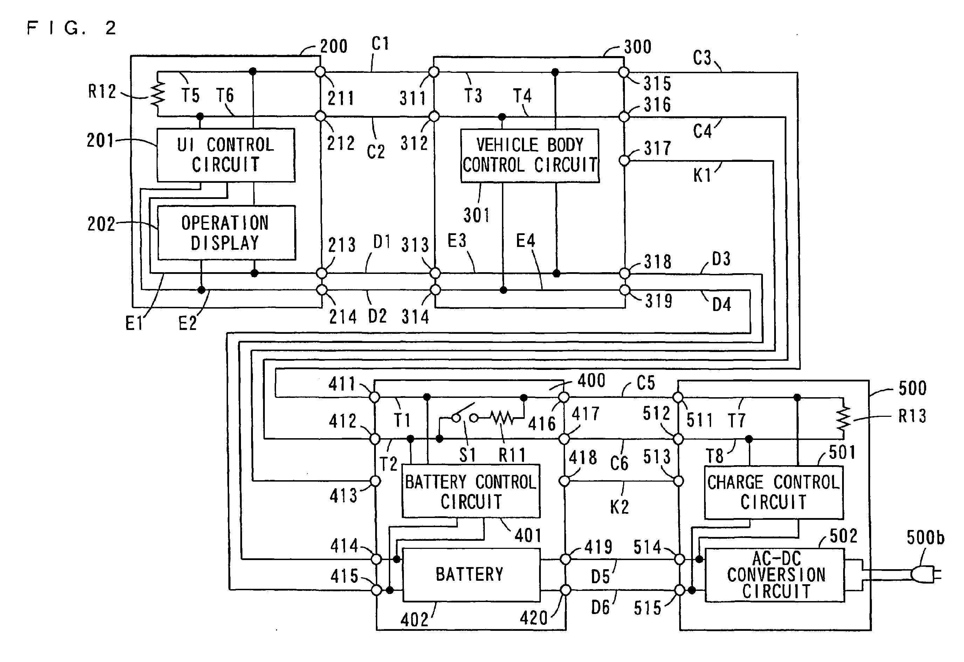

Next, description is made of the configurations of the user interface 200, the vehicle body controller 300, the battery apparatus 400 and the charger 500 in a simplified manner. Fig. 2 is a block diagram showing the configurations of the user interface 200, the vehicle body controller 300, the battery apparatus 400 and the charger 500 in a simplified manner. Fig. 2 shows the user interface 200, the vehicle body controller 300, the battery apparatus 400 and the charger 500 that are connected to one another.

As shown in Fig. 2, the user interface 200 includes an operation display 202, a user interface control circuit (hereinafter abbreviated as a UI control circuit) 201, a termination resistor R12 and terminals 211 to 214.

A communication path T5 is connected to the terminal 211, and a communication path T6 is connected to the terminal 212. The termination resistor R12 is connected between the communication paths T5, T6. An electric power path E1 is connected to the terminal 213, and an electric power path E2 is connected to the terminal 214. The UI control circuit 201 is connected to the communication paths T5, T6 and the electric power paths E1, E2, and the operation display 202 is connected to the electric power paths E1, E2. The UI control circuit 201 and the operation display 202 are connected to each other.

The UI control circuit 201 controls operation of the operation display 202. The operation display 202 displays information relating to a state of the electric bicycle 100 (e.g., remaining capacity of the battery 402 of the battery apparatus 400). The user can set the state of the electric bicycle 100 (e.g., ON/OFF of a power supply) via the operation display 202.

The vehicle body controller 300 includes a vehicle body control circuit 301 and terminals 311 to 319. The terminals 311, 315 are connected to each other through a communication path T3, and the terminals 312, 316 are connected to each other through a communication path T4. The terminals 313, 318 are connected to each other through an electric power path E3, and the terminals 314, 319 are connected to each other through an electric power path E4. The vehicle body control circuit 301 is connected to the communication paths T3, T4 and the electric power paths E3, E4.

The terminals 211, 212 of the user interface 200 are connected to the terminals 311, 312 of the vehicle body controller 300 through communication lines C1, C2, respectively, and the terminals 213, 214 of the user interface 200 are connected to the terminals 313, 314 of the vehicle body controller 300 through electric power lines D1, D2, respectively.

The user interface 200 and the vehicle body controller 300 are fixed to the electric bicycle 100 of Fig. 1 while being connected to each other through the communication lines C1, C2 and the electric power lines D1, D2.

The battery apparatus 400 includes a battery control circuit 401, the battery 402, a termination resistor R11, a switch S1 and terminals 411 to 420. The terminals 411, 416 are connected to each other through a communication path T1, and the terminals 412, 417 are connected to each other through a communication path T2. The termination resistor R11 and the switch S1 are connected in series between the communication paths T1, T2.

The battery control circuit 401 is connected to the communication paths T1, T2. The battery 402 is connected to the terminals 414, 415, 419, 420. The battery control circuit 401 and the battery 402 are connected to each other.

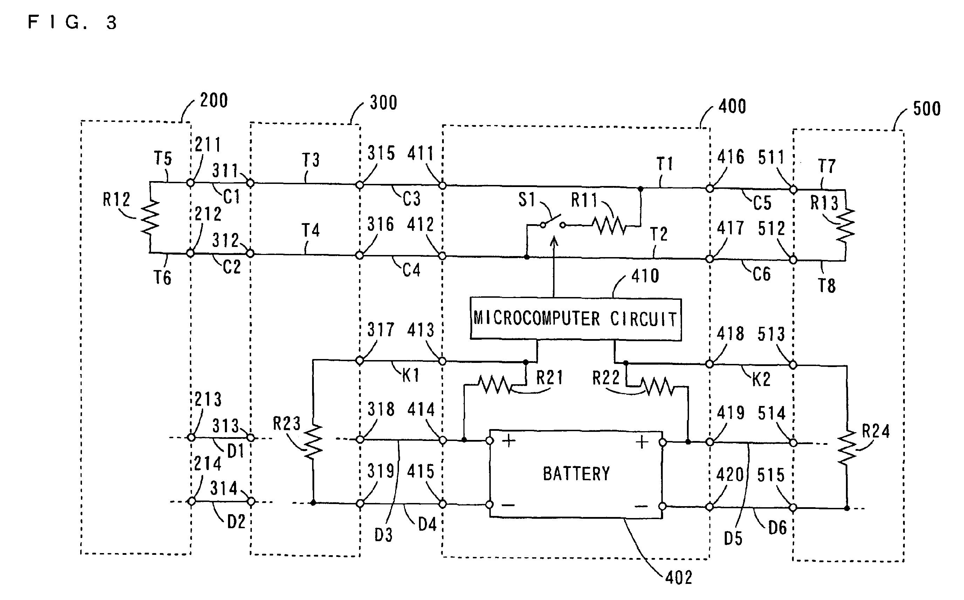

The battery apparatus 400 is attached to the battery attachment portion 300a of Fig. 1, so that the terminals 411, 412 of the battery apparatus 400 are connected to the terminals 315, 316 of the vehicle body controller 300 through communication lines C3, C4, respectively, and the terminal 413 of the battery apparatus 400 is connected to the terminal 317 of the vehicle body controller 300 through a detection line K1. The terminals 414, 415 of the battery apparatus 400 are connected to the terminals 318, 319 of the vehicle body controller 300 through electric power lines D3, D4. The switch S1 is controlled by a microcomputer circuit 410 that will be described below referring to Fig. 3.

The charger 500 includes a charge control circuit 501, an AC-DC conversion circuit 502, a termination resistor R13 and terminals 511 to 515. A communication path T7 is connected to the terminal 511, and a communication path T8 is connected to the terminal 512. The termination resistor R13 is connected between the communication paths T7, T8.

The charge control circuit 501 is connected to the communication paths T7, T8 and the terminals 514, 515. The AC-DC conversion circuit 502 is connected to the terminals 514, 515 and the plug 500b.

The plug 500a (Fig. 1) of the charger 500 is inserted in the plug socket 400a (Fig. 1) of the battery apparatus 400, so that the terminals 511, 512 of the charger 500 are connected to the terminals 416, 417 of the battery apparatus 400 through communication lines C5, C6, and the terminal 513 of the charger 500 is connected to the terminal 418 of the battery apparatus 400 through a detection line K2. The terminals 514, 515 of the charger 500 are connected to the terminals 419, 420 of the battery apparatus 400 through electric power lines D5, D6, respectively.

In the electric bicycle 100 according to the present embodiment, a communication bus is constituted by part or all of the communication lines C1 to C6 and the communication paths T1 to T8, and controller area network (CAN) communication is performed among the UI control circuit 201, the vehicle body control circuit 301, the battery control circuit 401 and the charge control circuit 501 through the communication bus.

The electric power is supplied from the battery 402 of the battery apparatus 400 to the vehicle body controller 300 and the user interface 200 through the electric power lines D1 to D4. Also, the electric power is supplied from the commercial power supply to the battery 402 of the battery apparatus 400 through the AC-DC conversion circuit 502 of the charger 500 and the electric power lines D5, D6.

### (3) Control of the Switch of the Battery Apparatus

Next, description is made of control of the switch S1 of the battery apparatus 400. Fig. 3 is a schematic diagram showing the detailed configuration of the battery apparatus 400. Fig. 3 does not show the UI control circuit 201, the operation display 202, the vehicle body control circuit 301, the battery control circuit 401, the charge control circuit 501 and the AC-DC conversion circuit 502 of Fig. 2.

As shown in Fig. 3, the battery apparatus 400 includes the microcomputer circuit 410 and detection resistors R21, R22. The microcomputer circuit 410 includes a microcomputer chip and its peripheral circuit, and connected to the terminals 413, 418 and the switch S1. Voltages of the terminals 413, 418 are given to the microcomputer circuit 410. The microcomputer circuit 410 controls the switch S1 based on the voltages of the terminals 413, 418. Details of operation of the microcomputer circuit 410 will be described below.

The terminals 414, 419 are connected to plus terminals of the battery 402, and the terminals 415, 420 are connected to minus terminals of the battery 402. The detection resistor R21 is connected between the terminal 413 and the terminal 414, and the detection resistor R22 is connected between the terminal 418 and the terminal 419.

The vehicle body controller 300 includes a detection resistor R23. The detection resistor R23 is connected between the terminal 317 and the terminal 319.

The charger 500 includes a detection resistor R24. The detection resistor R24 is connected between the terminal 513 and the terminal 515.

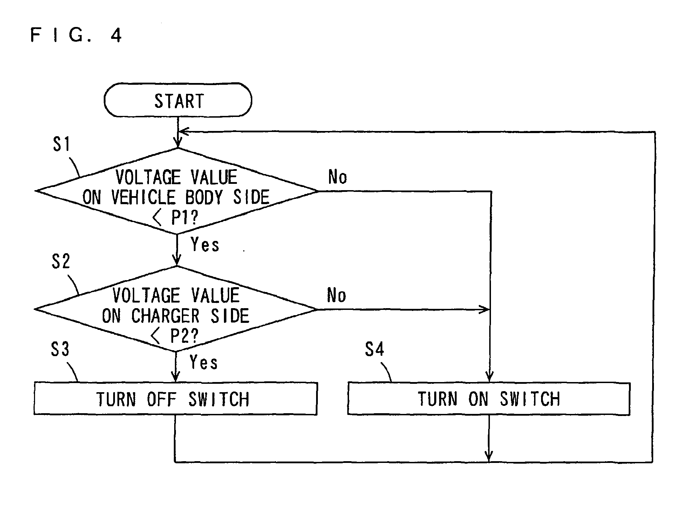

Next, description is made of the operation of the microcomputer circuit 410 of the battery apparatus 400. Fig. 4 is a flowchart showing the operation of the microcomputer circuit 410.

As shown in Fig. 4, the microcomputer circuit 410 first determines whether or not the voltage of the terminal 413 (Fig. 3) (hereinafter referred to as the voltage on the vehicle body side) is lower than a prescribed value P1 (Step S1).

Here, a current does not pass through the terminal 413 of the battery apparatus 400 when the terminals 413 to 415 of the battery apparatus 400 and the terminals 317 to 319 of the vehicle body controller 300 are not connected to each other, respectively. Therefore, the voltage on the vehicle body side is equal to the terminal voltage of the battery 402 (the voltage between the plus terminal and the minus terminal).

Meanwhile, a series circuit is formed by the battery 402 and the detection resistor R21 of the battery apparatus 400 and the detection resistor R23 of the vehicle body controller 300 when the terminals 413 to 415 of the battery apparatus 400 and the terminals 317 to 319 of the vehicle body controller 300 are connected to each other, respectively. In this case, the voltage on the vehicle body side attains a voltage (hereinafter referred to as the divided voltage value) obtained by dividing the terminal voltage of the battery 402 by the detection resistors R21, R23.

The above-mentioned prescribed value P1 is set to an intermediate value between the terminal voltage of the battery 402 and the divided voltage value caused by the detection resistors R21, R23. Thus, the voltage on the vehicle body side becomes higher than the prescribed value P1 when the battery apparatus 400 and the vehicle body controller 300 are not connected to each other, and becomes lower than the prescribed value P1 when the battery apparatus 400 and the vehicle body controller 300 are connected to each other.

When the voltage on the vehicle body side is lower than the prescribed value P1, the microcomputer circuit 410 determines that the battery apparatus 400 and the vehicle body controller 300 are connected to each other, and determines whether or not the voltage of the terminal 418 (hereinafter referred to as the voltage on the charger side) is lower than a prescribed value P2 (Step S2).

When the terminals 418 to 420 of the battery apparatus 400 and the terminals 513 to 515 of the charger 500 are not connected to each other, respectively, the current does not pass through the terminal 418 of the battery apparatus 400. Therefore, the voltage on the charger side is equal to the terminal voltage of the battery 402.

Meanwhile, when the terminals 418 to 420 of the battery apparatus 400 and the terminals 513 to 515 of the charger 500 are connected to each other, respectively, a series circuit is formed by the battery 402 and the detection resistor R22 of the battery apparatus 400 and the detection resistor R24 of the charger 500. In this case, the voltage on the charger side attains a voltage obtained by dividing the terminal voltage of the battery 402 by the detection resistors R22, R24 (hereinafter referred to as a divided voltage value).

The above-mentioned prescribed value P2 is set to an intermediate value between the terminal voltage of the battery 402 and the divided voltage value caused by the detection resistors R22, R24. Accordingly, the voltage on the charger side becomes higher than the prescribed value P2 when the battery apparatus 400 and the charger 500 are not connected to each other, and becomes lower than the prescribed value P2 when the battery apparatus 400 and the charger 500 are connected to each other.

When the voltage on the charger side is lower than the prescribed value P2, the microcomputer circuit 410 determines that the battery apparatus 400 and the charger 500 are connected to each other, and turns off the switch S1 (Step S3). This causes the termination resistor R11 to be electrically separated from the communication paths T1, T2. In this case, the termination resistors R12, R13 are connected to the communication paths T1, T2.

Meanwhile, when the voltage of the terminal 413 is not less than the prescribed value P1 in Step S1, or when the voltage of the terminal 418 is not less than the prescribed value P2 in Step S2, the microcomputer circuit 410 turns on the switch S1 (Step S4). This causes the termination resistor R11 to be electrically connected between the communication paths T1, T2. In this case, at least one of the termination resistors R12, R13 is not connected to the communication paths T1, T2.

The microcomputer circuit 410 repeats the processes of Steps S1 to S4. This allows for switching between the state where the termination resistor R11 is electrically connected between the communication paths T1, T2 (hereinafter referred to as the connected state) and the state where the termination resistor R11 is electrically separated from the communication paths T1, T2 (hereinafter referred to as the non-connected state) depending on a connection state among the vehicle body controller 300, the battery apparatus 400 and the charger 500.

A step-up circuit or a step-down circuit that raises or drops the voltage applied from the battery 402 of the battery apparatus 400 to the microcomputer circuit 410 may be provided for detecting connection between the vehicle body controller 300 and the battery apparatus 400 and connection between the charger 500 and the battery apparatus 400.

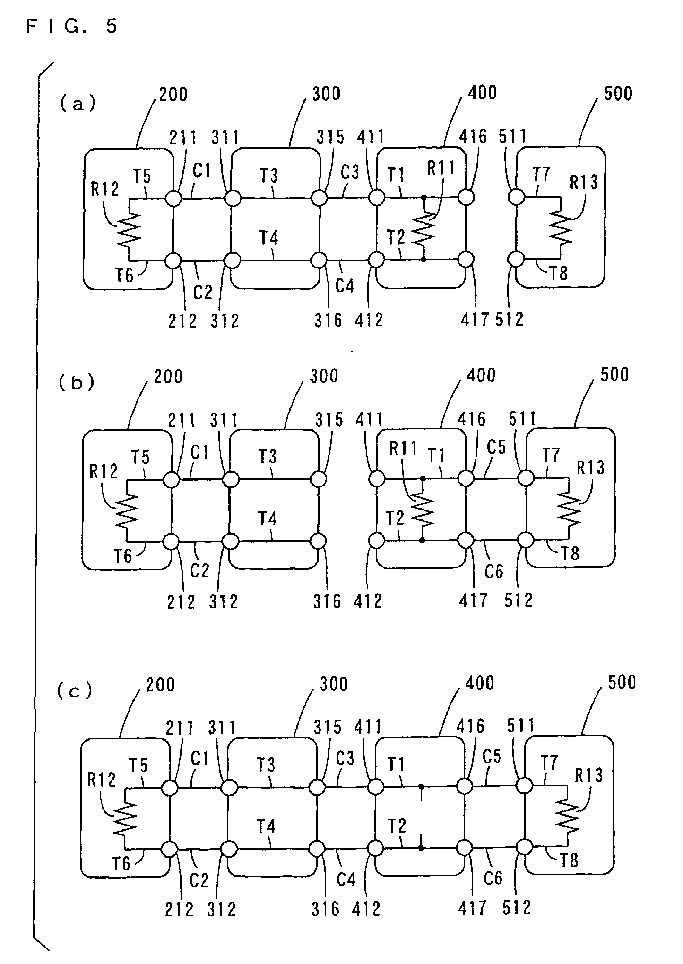

Fig. 5 is a schematic diagram for explaining switching of the state of the termination resistor R11.

As shown in Fig. 5 (a), the termination resistor R11 enters the connected state when the battery apparatus 400 is connected to the vehicle body controller 300 and the charger 500 is not connected to the battery apparatus 400. In this case, the communication paths T1 to T6 and the communication lines C1 to C4 constitute the communication bus, the termination resistor R12 of the user interface 200 is connected to one end of the communication bus, and the termination resistor R11 of the battery apparatus 400 is connected to the other end of the communication bus.

In the state shown in Fig. 5 (a), the electric bicycle 100 is driven or stopped while the battery apparatus 400 is attached to the battery attachment portion 300a (Fig. 1).

In this case, the remaining capacity of the battery 402 (Fig. 2) of the battery apparatus 400 is applied from the battery control circuit 401 (Fig. 2) to the vehicle body control circuit 301 (Fig. 2) and the UI control circuit 201 (Fig. 2), for example. The vehicle body control circuit 301 controls the motor MO (Fig. 1) depending on the remaining capacity of the battery 402. The UI control circuit 201 displays the remaining capacity of the battery 402 on the operation display 202 (Fig. 2).

As shown in Fig. 5 (b), the termination resistor R11 enters the connected state when the charger 500 is connected to the battery apparatus 400 and the battery apparatus 400 is not connected to the vehicle body controller 300. In this case, the communication paths T1, T2, T7, T8 and the communication lines C5, C6 constitute the communication bus, the termination resistor R11 of the battery apparatus 400 is connected to one end of the communication bus, and the termination resistor R13 of the charger 500 is connected to the other end of the communication bus.

In the state shown in Fig. 5 (b), the battery 402 (Fig. 2) of the battery apparatus 400 is charged by the charger 500 while the battery apparatus 400 is separated from the battery attachment portion 300a (Fig. 1).

In this case, charged capacity of the battery 402 (Fig. 2) of the battery apparatus 400 is applied from the battery control circuit 401 (Fig. 2) to the charge control circuit 501 (Fig. 2), for example. When the charged capacity of the battery 402 reaches a given value, the charge control circuit 501 stops supply of electric power from the commercial power supply to the battery apparatus 400. In addition, a signal indicating an occurrence of abnormality of the battery apparatus 400 is applied from the battery control circuit 401 to the charge control circuit 501 (Fig. 2). In the case, the charge control circuit 501 stops the supply of electric power from the commercial power supply to the battery apparatus 400.

As shown in Fig. 5 (c), the termination resistor R11 enters the non-connected state when the battery apparatus 400 is connected to the vehicle body controller 300 and the charger 500 is connected to the battery apparatus 400. In this case, the communication paths T1 to T8 and the communication lines C1 to C6 constitute the communication bus, the termination resistor R12 of the user interface 200 is connected to one end of the communication bus, and the termination resistor R13 of the charger 500 is connected to the other end of the communication bus.

In the state shown in Fig. 5 (c), the battery 402 of the battery apparatus 400 is charged by the charger 500 while the battery apparatus 400 is attached to the battery attachment portion 300a (Fig. 1).

In this case, the charged capacity of the battery 402 (Fig. 2) of the battery apparatus 400 is applied from the battery control circuit 401 (Fig. 2) to the charge control circuit 501 (Fig. 2), for example. When the charged capacity of the battery 402 reaches the given value, the charge control circuit 501 stops the supply of electric power from the commercial power supply to the battery apparatus 400. Moreover, the signal indicating an occurrence of abnormality of the battery apparatus 400 is applied from the battery control circuit 401 to the charge control circuit 501. In the case, the charge control circuit 501 stops the supply of electric power from the commercial power supply to the battery apparatus 400.

The charged capacity of the battery 402 of the battery apparatus 400 is applied from the battery control circuit 401 to the UI control circuit 201 (Fig. 2). The UI control circuit 201 displays control circuit 201 displays the charged capacity of the battery 402 on the operation display 202 (Fig. 2).

A signal for inhibiting the electric bicycle 100 from being driven is applied from the battery control circuit 401 to the vehicle body control circuit 301. In this case, the vehicle body control circuit 301 locks rotation of the crank 108 (Fig. 1) using a locking mechanism that is not shown. This prevents a user from erroneously driving the electric bicycle 100.

### (4) Effects

In the battery apparatus 400 according to the present embodiment, the termination resistor R11 is switched between the connected state and the non-connected state based on the voltage on the vehicle body side and the voltage on the charger side. In this case, the termination resistor R11 is connected to the communication paths T1, T2 when the battery apparatus 400 is not connected to at least one of the vehicle body controller 300 and the charger 500, that is, when at least one of the termination resistors R12, R13 is not connected to the communication paths T1, T2. Meanwhile, the termination resistor R11 is not connected to the communication paths T1, T2 when the battery apparatus 400 is connected to the vehicle body controller 300 and the charger 500, that is, when the termination resistors R12, R13 are connected to the communication paths T1, T2.

Thus, even though the user changes the connection state among the vehicle body controller 300, the battery apparatus 400 and the charger 500 depending on the situation, the state where the two termination resistors are properly connected to the communication bus is maintained. This allows for good CAN communication among the user interface 200, the vehicle body controller 300, the battery apparatus 400 and the charger 500.

### (5) Modifications

### (5-1)

While the termination resistor R13 is provided in the charger 500 in the above-described embodiment, the termination resistor R13 may not be provided in the charger 500 when the lengths of the communication lines C5, C6 are comparatively short, for example. In the case, the detection resistor R24 of the charger 500 is set to have a different value from that of the detection resistor R24 when the termination resistor R13 is provided in the charger 500.

As described above, when the terminals 418 to 420 of the battery apparatus 400 and the terminals 513 to 515 of the charger 500 are connected to each other, respectively, the voltage on the charger side attains the divided voltage value obtained by dividing the terminal voltage of the battery 402 by the detection resistors R22, R24.

The divided voltage value differs depending on the value of the detection resistor R24. Therefore, when the value of the detection resistor R24 differs depending on whether the termination resistor R13 is provided or not, the voltage on the charger side also differs depending on whether the termination resistor R13 is provided or not.

In this case, the voltage on the charger side when the termination resistor R13 is provided in the charger 500, and the voltage on the charger side when the termination resistor R13 is not provided in the charger 500 are previously stored in the microcomputer circuit 410 of the battery apparatus 400.

Accordingly, the microcomputer circuit 410 of the battery apparatus 400 can determine whether or not the termination resistor R13 is provided in the charger 500 based on the voltage on the charger side. This allows the microcomputer circuit 410 of the battery apparatus 400 to control the state of the termination resistor R11 depending on the presence/absence of the termination resistor R13 in the charger 500.

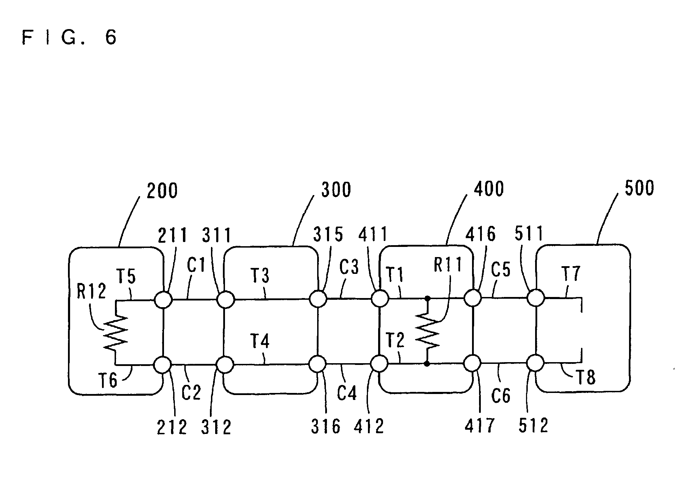

Fig. 6 is a schematic diagram for explaining switching of the state of the termination resistor R11 in the battery apparatus 400 when the termination resistor R13 is not provided in the charger 500.

As shown in Fig. 6, when the termination resistor R13 is not provided in the charger 500, the termination resistor R11 enters the connected state while the battery apparatus 400 is connected to the vehicle body controller 300 and the charger 500 is connected to the battery apparatus 400.

In this case, the communication paths T1 to T8 and the communication lines C1 to C6 constitute the communication bus, and the termination resistor R12 of the user interface 200 and the termination resistor R11 of the battery apparatus 400 are connected to the communication bus. That is, the termination resistor R11 of the battery apparatus 400, instead of the termination resistor R13 of the charger 500 in the example of Fig. 5 (c), is connected to the communication bus. Thus, the state where the two termination resistors are connected to the communication bus is maintained. This allows for good CAN communication among the user interface 200, the vehicle body controller 300, the battery apparatus 400 and the charger 500.

### (5-2)

A capacitor may be provided in the charger 500 in either one of the case where the termination resistor R13 is provided in the charger 500 or the case where the termination resistor R13 is not provided in the charger 500.

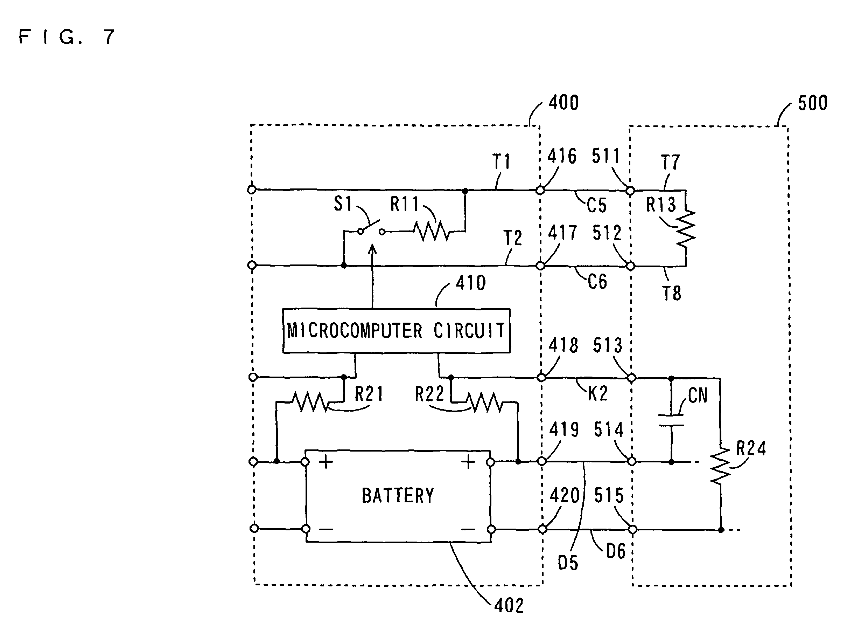

Fig. 7 is a diagram showing an example in which a capacitor is provided in the charger 500. In the example of Fig. 7, the termination resistor R13 is provided in the charger 500, and the capacitor CN is connected between the terminal 513 and the terminal 514.

When the capacitor CN is connected between the terminal 513 and the terminal 514, the voltage on the charger side gradually drops from the terminal voltage of the battery 402 to the divided voltage value caused by the detection resistors R22, R24 at the time of connection of the battery apparatus 400 and the charger 500 to each other. Meanwhile, when the capacitor CN is not connected between the terminal 513 and the terminal 514, the voltage on the charger side instantaneously drops from the terminal voltage of the battery 402 to the divided voltage value caused by the detection resistors R22, R24 at the time of connection of the battery apparatus 400 and the charger 500 to each other.

In this case, a drop time of the voltage on the charger side when the termination resistor R13 is provided in the charger 500 and a drop time of the voltage on the charger side when the termination resistor R13 is not provided in the charger 500 are previously stored in the microcomputer circuit 410 of the battery apparatus 400.

This allows the microcomputer circuit 410 of the battery apparatus 400 to determine whether or not the termination resistor R13 is provided in the charger 500 based on the drop time of the voltage on the charger side. Accordingly, as in the examples shown in Figs. 5 and 6, the microcomputer circuit 410 of the battery apparatus 400 can control the state of the termination resistor R11 depending on the presence/absence of the termination resistor R13 in the charger 500.

### (5-3)

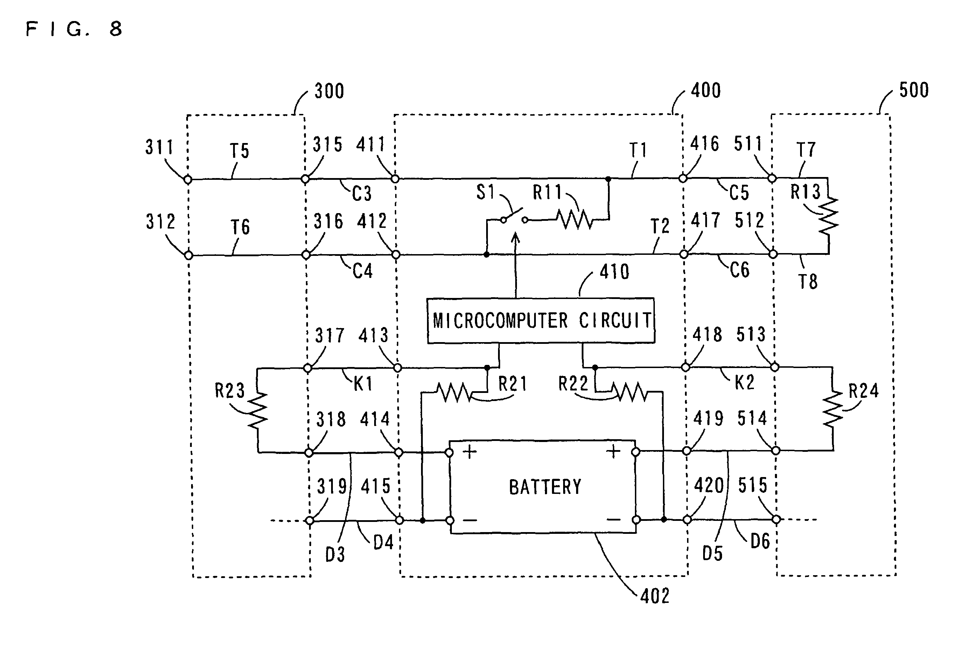

Fig. 8 is a schematic diagram showing another example of connection of the detection resistors R21 to R24 in the vehicle body controller 300, the battery apparatus 400 and the charger 500. The example shown in Fig. 8 is different from the example of Fig. 3 in the following points.

In the example of Fig. 8, the detection resistor R21 is connected between the terminal 413 and the terminal 415, and the detection resistor R22 is connected between the terminal 418 and the terminal 420 in the battery apparatus 400. In the vehicle body controller 300, the detection resistor R23 is connected between the terminal 317 and the terminal 318. In the charger 500, the detection resistor R24 is connected between the terminal 513 and the terminal 514.

When the terminals 413 to 415 of the battery apparatus 400 and the terminals 317 to 319 of the vehicle body controller 300 are not connected to each other, respectively, the current does not pass through the terminal 413 of the battery apparatus 400. Therefore, the voltage on the vehicle body side attains zero.

Meanwhile, when the terminals 413 to 415 of the battery apparatus 400 and the terminals 317 to 319 of the vehicle body controller 300 are connected to each other, respectively, the voltage on the vehicle body side attains the divided voltage value obtained by dividing the terminal voltage of the battery 402 by the detection resistors R21, R23.

When the terminals 418 to 420 of the battery apparatus 400 and the terminals 513 to 515 of the charger 500 are not connected to each other, respectively, the current does not pass through the terminal 418 of the battery apparatus 400. Therefore, the voltage on the charger side attains zero.

Meanwhile, when the terminals 418 to 420 of the battery apparatus 400 and the terminals 513 to 515 of the charger 500 are connected to each other, respectively, the voltage on the charger side attains the divided voltage value obtained by dividing the terminal voltage of the battery 402 by the detection resistors R22, R24.

This allows the microcomputer circuit 410 of the battery apparatus 400 to determine whether or not the battery apparatus 400 and the vehicle body controller 300 are connected to each other based on the voltage on the vehicle body side. Also, the microcomputer circuit 410 of the battery apparatus 400 can determine whether or not the battery apparatus 400 and the charger 500 are connected to each other based on the voltage on the charger side.

As a result, the state of the termination resistor R11 of the battery apparatus 400 can be appropriately switched depending on the connection state among the vehicle body controller 300, the battery apparatus 400 and the charger 500, as shown in Fig. 5.

In the example of Fig. 8, the termination resistor R13 may not be provided in the charger 500. In the case, the detection resistor R24 of the charger 500 is set to have the different value from the value of the detection resistor R24 of the charger 500 when the termination resistor R13 is provided in the charger 500.

In this case, similarly to the foregoing example, the voltage on the charger side when the termination resistor R13 is provided in the charger 500 and the voltage on the charger side when the termination resistor R13 is not provided in the charger 500 are previously stored in the microcomputer circuit 410 of the battery apparatus 400.

This allows the microcomputer circuit 410 of the battery apparatus 400 to determine whether or not the termination resistor R13 is provided in the charger 500 based on the voltage on the charger side. Accordingly, the microcomputer circuit 410 of the battery apparatus 400 can control the state of the termination resistor R11 depending on the presence/absence of the termination resistor R13 in the charger 500 as in the examples shown in Figs. 5 and 6.

In the example of Fig. 8, the capacitor may be provided in the charger 500 in either one of the case where the termination resistor R13 is provided in the charger 500 or the case where the termination resistor R13 is not provided in the charger 500.

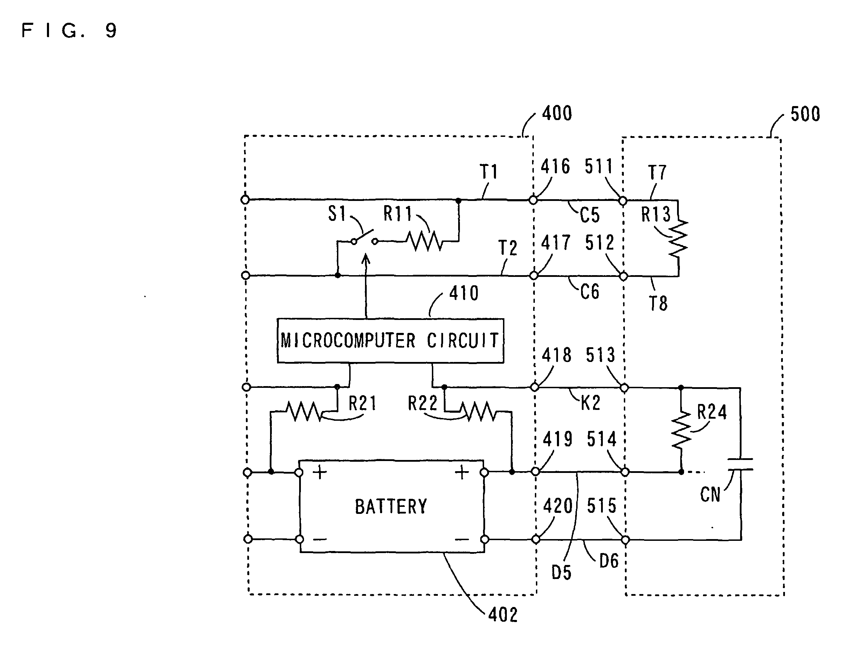

Fig. 9 is a diagram showing an example in which the capacitor is provided in the charger 500 of Fig. 8. In the example of Fig. 9, the termination resistor R13 is provided in the charger 500, and the capacitor CN is connected between the terminal 513 and the terminal 515.

When the capacitor CN is connected between the terminal 513 and the terminal 515, the voltage on the charger side gradually rises from zero to the divided voltage value caused by the detection resistors R22, R24 at the time of connection of the battery apparatus 400 and the charger 500 to each other. Meanwhile, when the capacitor CN is not connected between the terminal 513 and the terminal 515, the voltage on the charger side instantaneously rises from zero to the divided voltage value caused by the detection resistors R22, R24 at the time of connection of the battery apparatus 400 and the charger 500 to each other.

In this case, a rise time of the voltage on the charger side when the termination resistor R13 is provided in the charger 500 and a rise time of the voltage on the charger side when the termination resistor R13 is not provided in the charger 500 are previously stored in the microcomputer circuit 410 of the battery apparatus 400.

This allows the microcomputer circuit 410 of the battery apparatus 400 to determine whether or not the termination resistor R13 is provided in the charger 500 based on the rise time of the voltage on the charger side. Accordingly, as in the examples shown in Figs. 5 and 6, the microcomputer circuit 410 of the battery apparatus 400 can control the state of the termination resistor R11 depending on the presence/absence of the termination resistor R13 in the charger 500.

### (5-4)

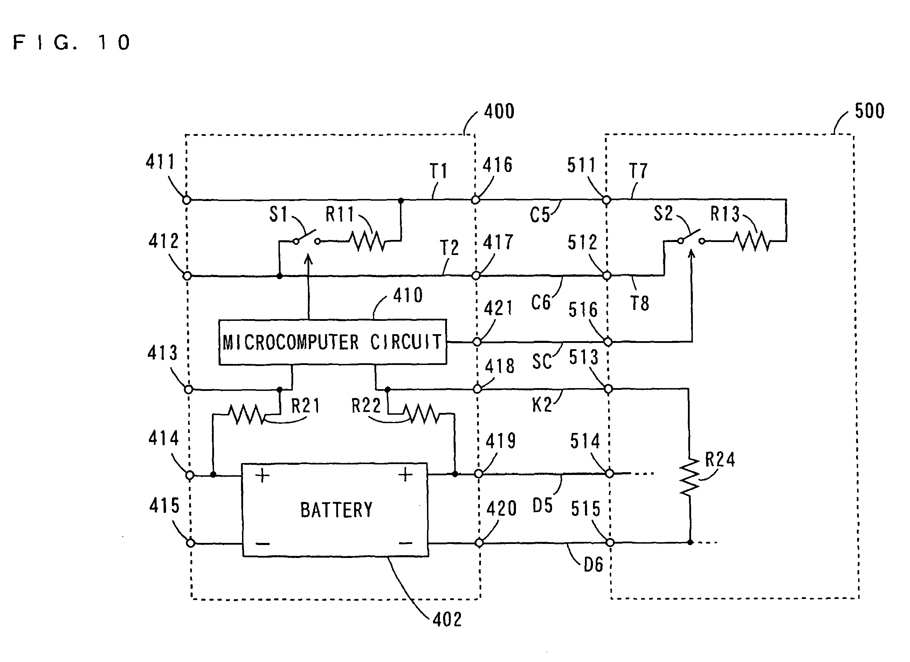

Fig. 10 is a schematic diagram showing a modification of the battery apparatus 400 and the charger 500. The example shown in Fig. 10 is different from the example of Fig. 3 in the following points.

In the example of Fig. 10, the battery apparatus 400 further includes a terminal 421. The terminal 421 is connected to the microcomputer circuit 410. The charger 500 further includes a terminal 516 and a switch S2. The switch S2 is connected between the termination resistor R13 and the communication path T8. The terminal 516 is connected to the switch S2.

The terminal 421 of the battery apparatus 400 and the terminal 516 of the charger 500 are connected to each other through a control line SC. The microcomputer circuit 410 of the battery apparatus 400 applies an ON/OFF signal to the switch S2 of the charger 500 through the control line SC. This allows for switching between the state where the termination resistor R13 is electrically connected between the communication paths T7, T8 (the connected state) and the state where the termination resistor R13 is electrically separated from the communication paths T7, T8 (the non-connected state). The charger 500 of Fig. 10 is an example of a third module.

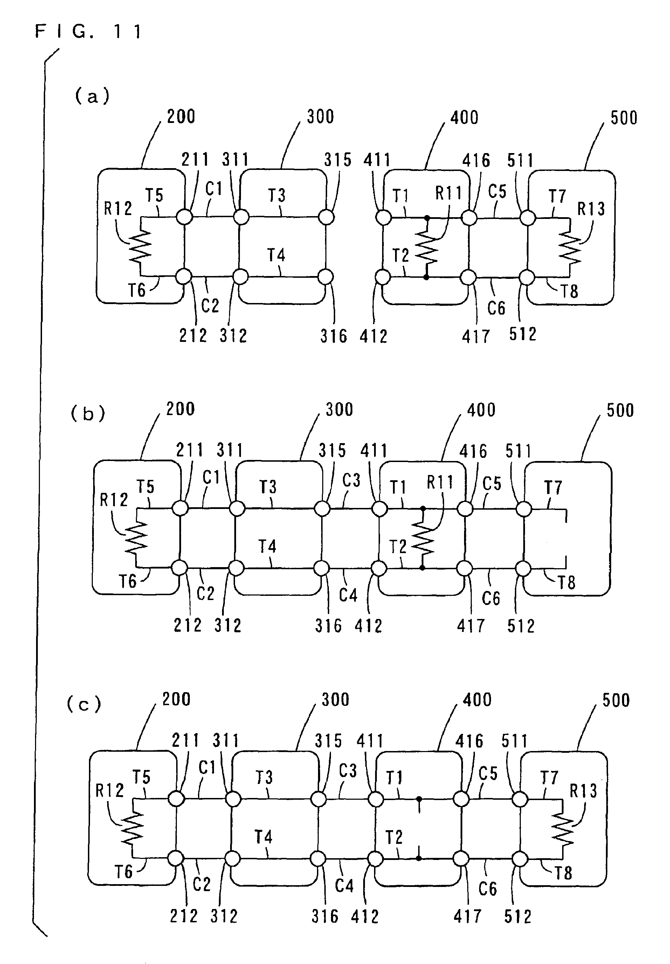

Fig. 11 is a schematic diagram showing an example of switching of the state of the termination resistor R13. As shown in Fig. 11 (a), the microcomputer circuit 410 (Fig. 10) of the battery apparatus 400 causes the termination resistor R13 to enter the connected state when the charger 500 is connected to the battery apparatus 400 and the battery apparatus 400 is not connected to the vehicle body controller 300.

In this case, the communication paths T1, T2, T7, T8 and the communication lines C5, C6 constitute the communication bus, the termination resistor R11 of the battery apparatus 400 is connected to one end of the communication bus, and the termination resistor R13 of the charger 500 is connected to the other end of the communication bus.

Meanwhile, as shown in Fig. 11 (b), the microcomputer circuit 410 of the battery apparatus 400 causes the termination resistor R13 to enter the non-connected state when the battery apparatus 400 is connected to the vehicle body controller 300 and the charger 500 is connected to the battery apparatus 400.

In this case, the communication paths T1 to T8 and the communication lines C1 to C6 constitute the communication bus, and the termination resistor R12 of the user interface 200 and the termination resistor R11 of the battery apparatus 400 are connected to the communication bus.

As shown in Fig. 11 (c), the microcomputer circuit 410 of the battery apparatus 400 may cause the termination resistor R11 of the battery apparatus 400 to enter the non-connected state and cause the termination resistor R13 of the charger 500 to enter the connected state when the battery apparatus 400 is connected to the vehicle body controller 300 and the charger 500 is connected to the battery apparatus 400.

In this case, the communication paths T1 to T8 and the communication lines C1 to C6 constitute the communication bus, and the termination resistor R12 of the user interface 200 and the termination resistor R13 of the charger 500 are connected to the communication bus.

In this manner, the microcomputer circuit 410 of the battery apparatus 400 controls the state of the termination resistor R13 of the charger 500, thereby maintaining the state where the two termination resistors are connected to the communication bus even though the connection state among the vehicle body controller 300, the battery apparatus 400 and the charger 500 is changed. This allows for good CAN communication among the user interface 200, the vehicle body controller 300, the battery apparatus 400 and the charger 500.

### (5-5)

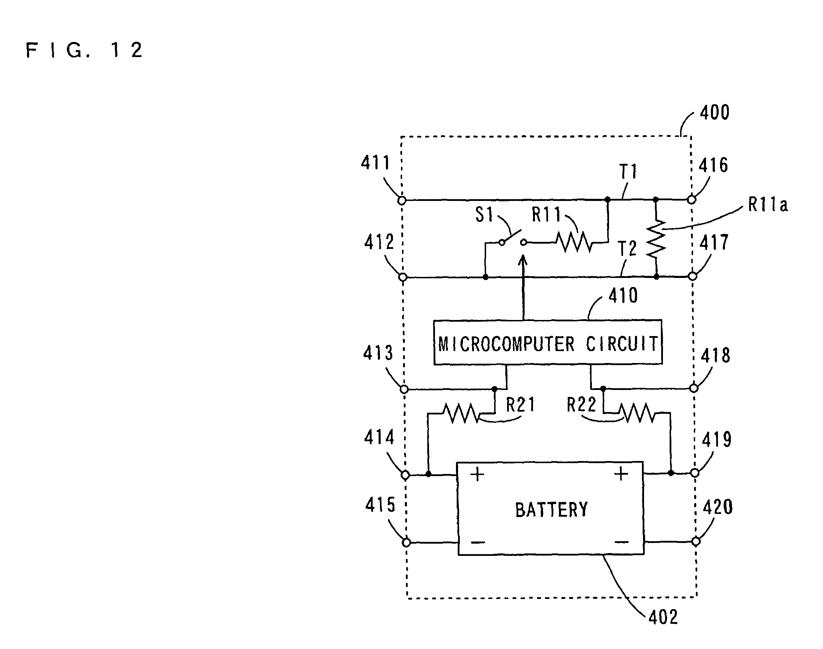

Fig. 12 is a schematic diagram showing another modification of the battery apparatus 400. The example shown in Fig. 12 is different from the example of Fig. 3 in the following points.

In the example of Fig. 12, the battery apparatus 400 further includes a termination resistor R11a. The termination resistor R11a is connected between the communication paths T1, T2 in parallel with a series circuit constituted by the termination resistor R11 and the switch S1.

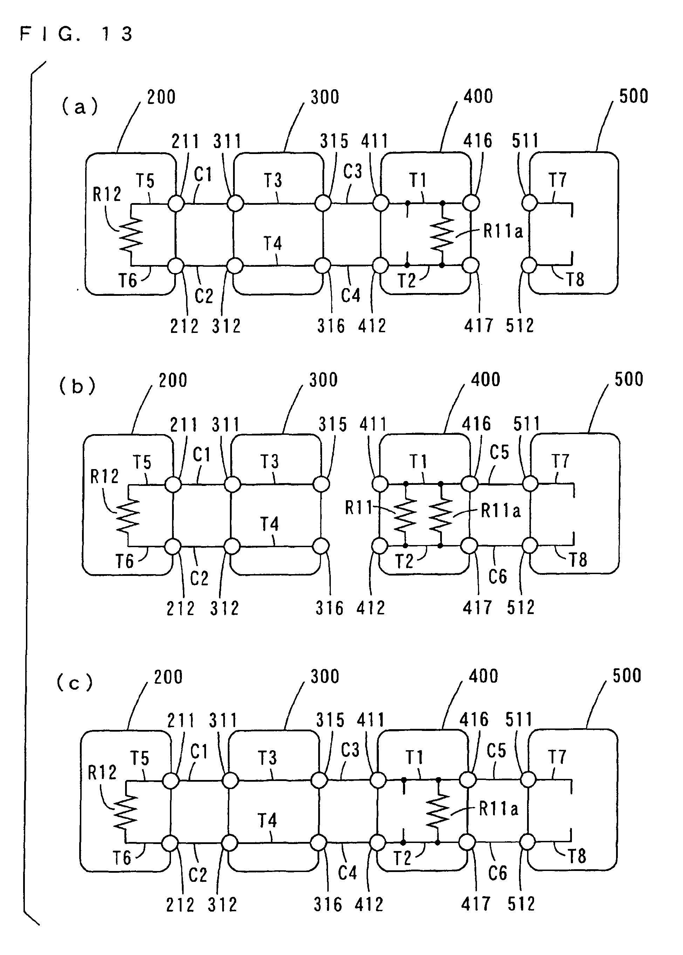

Fig. 13 is a schematic diagram showing an example of switching of the state of the termination resistor R11 in the battery apparatus 400 of Fig. 12. In the example of Fig. 13, the termination resistor R13 is not provided in the charger 500.

As shown in Fig. 13 (a), the termination resistor R11 enters the non-connected state when the battery apparatus 400 is connected to the vehicle body controller 300 and the charger 500 is not connected to the battery apparatus 400. In this case, the communication paths T1 to T6 and the communication lines C1 to C4 constitute the communication bus, the termination resistor R12 of the user interface 200 is connected to one end of the communication bus, and the termination resistor R11a of the battery apparatus 400 is connected to the other end of the communication bus.

As shown in Fig. 13 (b), the termination resistor R11 enters the connected state when the charger 500 is connected to the battery apparatus 400 and the battery apparatus 400 is not connected to the vehicle body controller 300. In this case, the communication paths T1, T2, T7, T8 and the communication lines C5, C6 constitute the communication bus, and the termination resistors R11, R11a of the battery apparatus 400 are connected to the communication bus.

As shown in Fig. 13 (c), the termination resistor R11 enters the non-connected state when the battery apparatus 400 is connected to the vehicle body controller 300 and the charger 500 is connected to the battery apparatus 400. In this case, the communication paths T1 to T8 and the communication lines C1 to C6 constitute the communication bus, and the termination resistor R12 of the user interface 200 and the termination resistor R11a of the battery apparatus 400 are connected to the communication bus.

In this manner, when the termination resistor R13 is not provided in the charger 500, the state where the two termination resistors are connected to the communication bus is maintained even though the connection state among the vehicle body controller 300, the battery apparatus 400 and the charger 500 is changed. This allows for good CAN communication among the user interface 200, the vehicle body controller 300, the battery apparatus 400 and the charger 500.

Since the termination resistor R11a is not separated from the communication lines T1, T2 due to malfunctions or the like, the termination resistor R11a is reliably connected to the communication bus during driving of the electric bicycle 100, that is, in the state of Fig. 13 (a). Accordingly, normal CAN communication among the user interface 200, the vehicle body controller 300 and the battery apparatus 400 can be reliably performed during driving of the electric bicycle 100. This results in a further improved level of safety during driving of the electric bicycle 100.

### (6) Other Embodiments

While the electric bicycle including the battery apparatus 400 is described in the foregoing embodiment, the battery apparatus 400 may be provided in another electric vehicle.

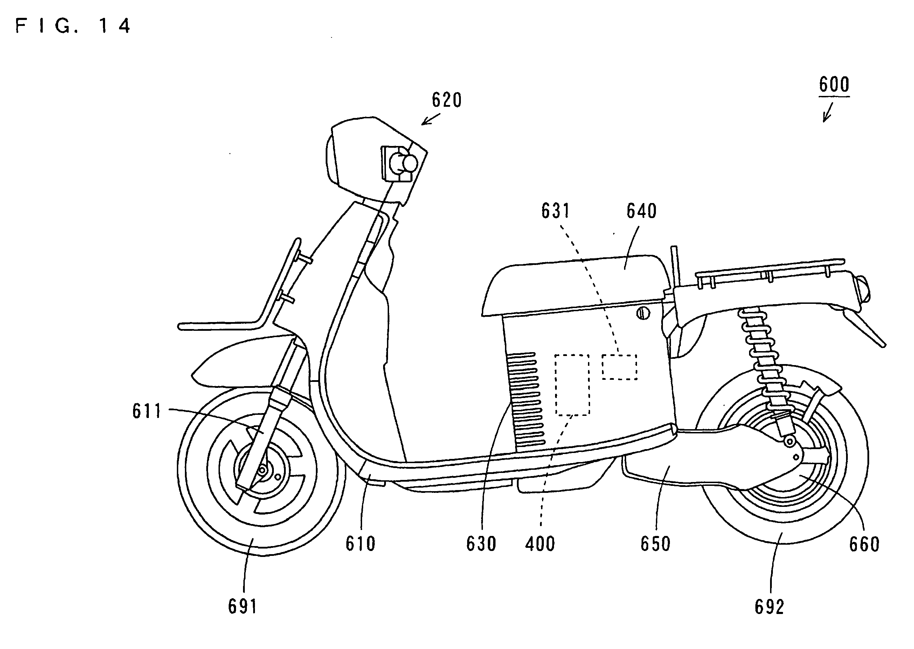

Fig. 14 is a side view of a two-wheeled electric vehicle including the battery apparatus 400. As shown in Fig. 14, the two-wheeled electric vehicle 600 includes a vehicle body frame 610, a front fork 611, a handle 620, a main body 630, a seat 640, a swing arm 650, a motor 660, a front wheel 691 and a rear wheel 692. In the following description, front, rear, left and right means front, rear, left and right directions seen from a position of a driver seated on the seat 640 of the two-wheeled electric vehicle 600.

The vehicle body frame 610 is of an underbone type, and provided to extend in a front-to-rear direction in a lower portion of the two-wheeled electric vehicle 600.

The front fork 611 is attached to a front end portion of the vehicle body frame 610 so as to swing from side to side. The front wheel 691 is attached to a lower end portion of the front fork 611. The handle 620 is attached to an upper end portion of the front fork 611.

The main body 630 is attached to a portion from the center to the rear of the vehicle body frame 610. The seat 640 is provided at an upper end portion of the main body 630. A main controller 631 and the battery apparatus 400 are provided within the main body 630. The main controller 631 and the battery apparatus 400 are electrically connected to each other.

The swing arm 650 is attached to a rear end portion of the vehicle body frame 610 to extend in the rear direction. In this state, a rear end portion of the swing arm 650 can swing in an up-and-down direction with respect to the vehicle body frame 610. The motor 660 is provided at a rear end of the swing arm 650. The rear wheel 692 is attached to a rotation shaft of the motor 660.

The motor 660 is electrically connected to the battery apparatus 400 and the main controller 631. Electric power is supplied from the battery apparatus 400 to the motor 660. During operation of the motor 660, a torque generated by the motor 660 is transmitted to the rear wheel 692 through the rotation shaft.

In the two-wheeled electric vehicle 600, the CAN communication is performed between the main controller 631 and the battery apparatus 400 through the communication bus. During the charge of the battery 402 (Fig. 2) of the battery apparatus 400, a charging device (not shown) is connected to the battery apparatus 400. In the case, the CAN communication is performed among the main controller 631, the battery apparatus 400 and the charging device through the communication bus.

Therefore, similarly to the foregoing embodiment, the termination resistor R11 (Fig. 3) of the battery apparatus 400 is switched between the connected state and the non-connected state depending on a connection state among the main controller 631, the battery apparatus 400 and the charging device. Accordingly, the state where the two termination resistors are connected to the communication bus is maintained even though the user changes the connection state among the main controller 631, the battery apparatus 400 and the charging device depending on the situation. This allows for good CAN communication among the main controller 631, the battery apparatus 400 and the charging device.

### (7) Still Other Embodiments

While the vehicle body controller 300, the charger 500 and the main controller 631 are each used as a module (a first or second module) connected to the battery apparatus in the foregoing embodiment, the present invention is not limited to this. For example, an accessory for vehicles such as a car navigation system or car audio equipment may be used as a module that is connected to the battery apparatus through the communication bus.

### (8) Correspondences between Elements in the Claims and Parts in Embodiments

In the following paragraph, non-limiting examples of correspondences between various elements recited in the claims below and those described above with respect to various preferred embodiments of the present invention are explained.

In the above-described embodiments, the battery control circuit 401 is an example of a control circuit, the connected state is an example of a first state, the non-connected state is an example of a second state, the termination resistor R11 is an example of a first termination resistor, the detection resistors R21, R22 and the terminals 413, 418 are an example of a detection circuit, the microcomputer circuit 410 is an example of a switch circuit, the vehicle body controller 300 or the main controller 631 is an example of a first module, the charger 500 is an example of a second module, the termination resistor R11a is an example of a second termination resistor, the charger 500 is an example of a third module, the termination resistor R13 is an example of a third termination resistor, and the electric bicycle 100 or the two-wheeled electric vehicle 600 is an example of an electric vehicle.

As each of various elements recited in the claims, various other elements having configurations or functions described in the claims can be also used.

While preferred embodiments of the present invention have been described above, it is to be understood that variations and modifications will be apparent to those skilled in the art without departing the scope and spirit of the present invention. The scope of the present invention, therefore, is to be determined solely by the following claims, as interpreted by the description and drawings.

## Claims

1. A battery apparatus arranged to form a communication bus when being connected to another module, comprising:
a control circuit arranged to have a communication function for communicating with said another module through said communication bus;
a battery arranged to supply electric power to said another module when said another module is connected to the battery apparatus;
a first termination resistor arranged to be switchable between a first state where the first termination resistor is connected to said communication bus and a second state where the first termination resistor is separated from said communication bus;
a detection circuit configured to be able to detect that said another module is connected to the battery apparatus; and
a switch circuit arranged to determine whether or not said another module is connected to the battery apparatus based on detection performed by said detection circuit, and selectively switches said first termination resistor between said first state and said second state based on a result of determination.

2. The battery apparatus according to claim 1, wherein
said another module includes first and second modules,
said battery supplies electric power to said first and second modules when said first and second modules are connected to the battery apparatus,
said detection circuit is configured to be able to feed back a voltage based on the electric power supplied to each of said first and second modules and detect the voltage fed back from each of said first and second modules when said first and second modules are connected to the battery apparatus, and
said switch circuit determines whether or not each of said first and second modules is connected to the battery apparatus based on the voltage detected by said detection circuit, and selectively switches said first termination resistor between said first state and said second state based on a result of determination.

3. The battery apparatus according to claim 2, wherein
when determining that said another module is connected to the battery apparatus, said switch circuit further determines whether or not said another module that is connected to the battery apparatus has a termination resistor based on the voltage detected by said detection circuit, and selectively switches said first termination resistor between said first state and said second state based on a result of determination.

4. The battery apparatus according to claim 2, further comprising a second termination resistor connected to said communication bus, wherein
said switch circuit determines whether or not two termination resistors are connected to said communication bus based on the voltage detected by said detection circuit, and switches said first termination resistor between said first state and said second state based on a result of determination such that two termination resistors are connected to said communication bus.

5. The battery apparatus according to claim 2, wherein
said another module includes a third module,
said third module has a third termination resistor arranged to be switchable between a third state where the third termination resistor is connected to said communication bus and a fourth state where the third termination resistor is separated from said communication bus, and
said switch circuit determines whether or not two termination resistors are connected to said communication bus based on the voltage detected by said detection circuit, and switches said third termination resistor between said third state and said fourth state based on a result of determination such that two termination resistors are connected to said communication bus.

6. An electric vehicle comprising:
the battery apparatus according to claim 1;
a motor driven by electric power supplied from said battery of said battery apparatus; and
a drive wheel that is rotated by a torque generated by said motor.
